# EUROPEAN PATENT APPLICATION

(11) **EP 0 636 535 A1**
(43) Date of publication of application: **01.02.1995**
(21) Application number: 94200006.8
(22) Date of filing: 04.01.1994
(51) Int. Cl.: B62M 17/00, B62J 39/00

(54) **Direct transmission system for a bicycle**

(30) Priority: 29.07.1993 CN 93220259
(71) Applicant: TA CHANG LAY INTERNATIONAL BUSINESS CO., LTD., Taichung, Taiwan (TW)
(72) Inventor: Lai, Ta Chi, No. 6, Alley 15, Taichung, Taiwan (TW)
(74) Representative: Smulders, Theodorus A.H.J., Ir.

(57) **Abstract**

A direct transmission system for a bicycle includes a first bevel gear (19) mounted on a front axle (11) of the bicycle to rotate therewith. A first box (12) is fixed to a bottom bracket (1) of the bicycle. A shell member has a second box (3) and a bracket (49) which are coupled together for housing the rear axle (51) of the bicycle. The bracket abuts against a hub member (5) of the bicycle. A chain stay (13) of the bicycle is securely engaged between the first box and the second box. A shaft (2) having a first end (20) and a second end (21), is mounted in the chain stay. The first and second ends respectively extend into the first and second boxes. A second bevel gear (18) is mounted on the first end of the shaft to rotate therewith and meshes with the first bevel gear. A third bevel gear (32) is mounted on the second end of the shaft to rotate therewith and is received in the second box. A fourth bevel gear (41) is mounted in the shell member for meshing with the third bevel gear and is securely attached to the hub member to rotate therewith.

## Description

The present invention relates to a direct transmission system, and more particularly to a direct transmission system for a bicycle.

The closest prior art of a direct transmission system for a bicycle is disclosed in the Applicant's own U.S. Patent No. 5,078,025, filed October 29, 1990. There are still a few drawbacks in this patent. First, the first bevel gear portion and the rear end of the shaft are not securely engaged, so that the first bevel gear portion is apt to be loosened from the shaft during long-term utilization, and thus causes the meshing engagement between the first and second bevel gear portions to be insufficiently tight. Moreover, the bottom bracket is in a closed state, so, it is not to easy to inspect the interior thereof so that the parts in the bottom bracket are not easy to be dismantled and assembled, and thus causing difficulty in maintenance. Further, the chain stay is not securely attached to the box of the direct transmission system so that the structure of the bicycle is not stable.

The present invention has arisen to mitigate and/or obviate the afore-mentioned disadvantages of the conventional direct transmission system for a bicycle.

In accordance with one aspect of the present invention, there is provided a direct transmission system for a bicycle. The bicycle has a front axle which has a first end and a second end, a bottom bracket engaged around the front axle, a rear axle, a hub member rotatably engaged around the rear axle, a chain stay, and a seat stay. The direct transmission system includes a first bevel gear mounted on the first end of the front axle to rotate therewith. A first box is fixed to the bottom bracket. A shell member has a second box and a bracket which are coupled together for housing the rear axle. The bracket abuts against the hub member and the chain stay is securely engaged between the first box and the second box. A shaft having a first end and a second end, is mounted in the chain stay. The first and second ends respectively extend into the first and second boxes. A second bevel gear is mounted on the first end of the shaft to rotate therewith and meshes with the first bevel gear. A third bevel gear is mounted on the second end of the shaft to rotate therewith and is received in the second box. A fourth bevel gear is mounted in the shell member for meshing with the third bevel gear and is securely attached to the hub member to rotate therewith.

By such an arrangement, the second and third bevel. gears are not apt to loosened from the shaft and are able to rotate normally even during long-term utilization.

Moreover, the direct transmission system in accordance with the present invention is easy to be assembled and dismantled. The bracket is easy to be detached from the second box so that a user can easily inspect the interior of the second box and maintain the interior assemblies.

Further objectives and advantages of the present invention will become apparent from a careful reading of the detailed description provided hereinbelow, with appropriate reference to the accompanying drawings.

In the drawings:

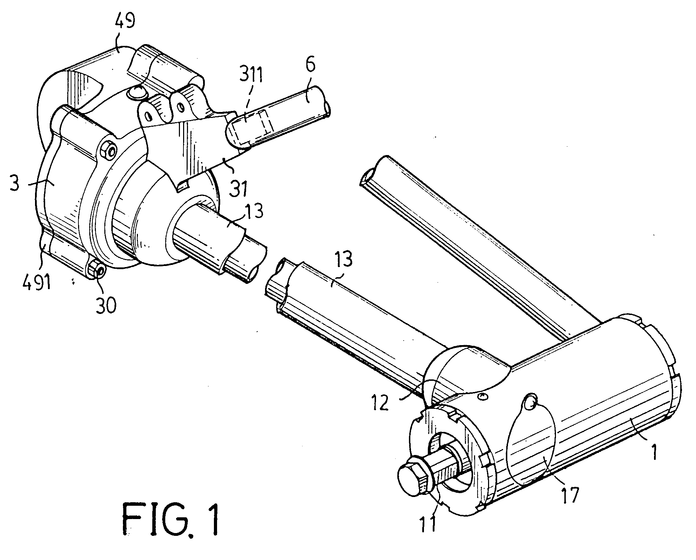

Fig. 1 is a partial perspective view of a direct transmission system for a bicycle in accordance with the present invention;

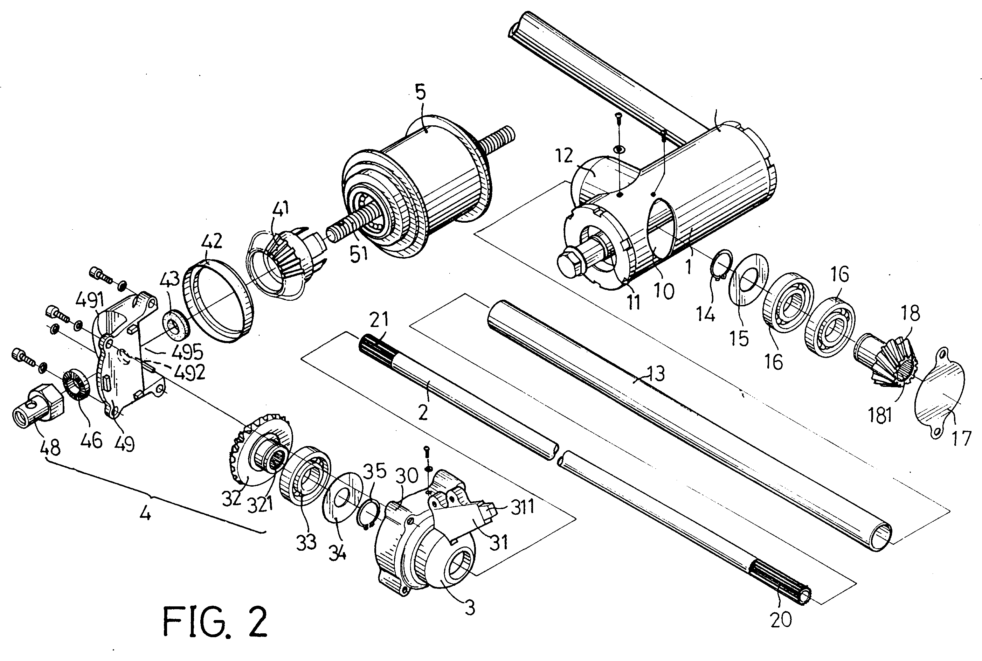

Fig. 2 is an exploded view of the direct transmission system for a bicycle as shown in Fig. 1; and

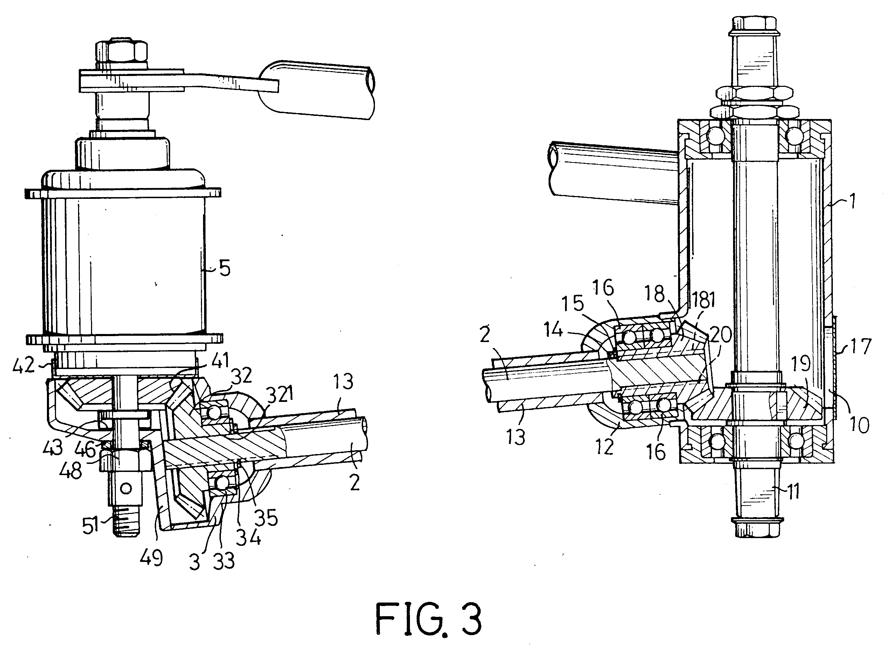

Fig. 3 is a top plan cross-sectional view of the direct transmission system.

Referring to the drawings, a direct transmission system is provided for a bicycle. The bicycle comprises a front axle 11 which has a first end and a second end, a bottom bracket 1 engaged around the front axle 11, a rear axle 51, a hub member 5 rotatably engaged around the rear axle 51, a chain stay 13, and a seat stay 6. The direct transmission system comprises a first bevel gear 19 mounted on the first end of the front axle 11 to rotate therewith. A first box 12 is fixed to the bottom bracket 1. The bottom bracket 1 has a first hole 10 formed in a peripheral portion thereof which is opposite to the first box 12 through which an interior of the bottom bracket 1 is viewable from exterior. A plate 17 is engaged on the bottom bracket 1 for covering the first hole 10.

A shell member 4 consists of a second box 3 and a bracket 49 which are coupled together for housing the rear axle 51. The bracket 49 abuts against the hub member 5 and has a second hole 492 formed therein through which the rear axle 51 can pass such that the rear axle 51 is threadedly engaged with a nut 48. A first washer 46 is mounted between the bracket 49 and the nut 48 for facilitating the engagement therebetween.

The chain stay 13 is securely attached by means such as brazing between the first box 12 and the second box 3. A shaft 2 having a first end 20 and a second end 21, is mounted in the chain stay 13. The first and second ends 20 and 21 respectively extend into the first and second boxes 12 and 3. The shaft 2 has an outer diameter substantially equal to the inner diameter of the chain stay 13.

A second bevel gear 18 is mounted on the first end 20 of the shaft 2 to rotate therewith and meshes with the first bevel gear 19. A pair of first ball bearings 16 are mounted between the second bevel gear 18 and the first box 12 to retain the second bevel gear 18 in place. A first retaining ring 14 with a second washer 15 are securely engaged on a distal end of the second bevel gear 18 to prevent the pair of first ball bearings 16 from disengaging with the second bevel gear 18.

A third bevel gear 32 is mounted on the second end 21 of the shaft 2 to rotate therewith and is received in the second box 3. A second ball bearing 33 is mounted between the third bevel gear 32 and the second box 3 to retain the third bevel gear 32 in place. A second retaining ring 35 with a third washer 34 are securely engaged on a distal end of the third bevel gear 32 to prevent the second ball bearing 33 from disengaging with the third bevel gear 32.

The second bevel gear 18 has a first key slot 181 formed therein and the third bevel gear 32 has a second key slot 321 formed therein. The first and second ends 20 and 21 of the shaft 2 each have a plurality of key slots longitudinally formed thereon and are respectively engaged with the first and second key slots 181 and 321 by means of appropriate keys in the second and third bevel gears 18 and 32.

A groove 495 is formed in the bracket 49 of the shell member 4 and communicates with the second hole 492. A fourth bevel gear 41 is mounted in the groove 495 of the bracket 49 for meshing with the third bevel gear 32 and is securely attached to the hub member 5 to rotate therewith. A bush 43 is mounted between the bracket 49 and the fourth bevel gear 41. A ring element 42 is mounted between the bracket 49 and the hub member 5 for tightly sealing the hub member 5.

It is to be noted that the second box 3 has a plurality of, e.g., four first lugs 30 each having a hole therein projecting from an peripheral portion thereof, and the bracket 49 has four corresponding second lugs 491 each having a hole therein projecting from one side thereof for engagement with the first lugs 30 of the second box 3 by bolts and nuts. A seat stay end 31 is integrally formed on the second box 3 and extends outwardly therefrom. A protrusion 311 protrudes from a distal end of the seat stay end 31 for securely engaging with the seat stay 6 of the bicycle.

Accordingly, by such an arrangement, the direct transmission system for a bicycle in accordance with the present invention has the following advantages and benefits:
(1) The shaft 2 is securely engaged with the second and third bevel gears 18 and 32 by the first and second key slots 181 and 321 by means of appropriate keys. Moreover, the second and third bevel gears 18 and 32 are retained in place by the first and second ball bearings 16 and 33 which are respectively fixed in position by the first and second retaining rings 14 and 35, so that the second and third bevel gears 18 and 32 are not apt to loosen from the shaft 20 and are able to rotate normally even during long-term utilization.
(2) The direct transmission system is easy to be assembled and dismantled. When the plate 17 is removed, it is easy to inspect the interior of the bottom bracket 1, and it is convenient to pour lubricating oils into the first and second bevel gears 19 and 18.
(3) The bracket 49 is easily detached from the second box 3 so that a user can easily inspect the interior of the second box 3 and maintain the interior assemblies.
(4) The seat stay end 31 is integrally formed on the second box 3 and is securely engaged with the seat stay 6 of the bicycle. Further, the chain stay 13 is securely attached by means such as brazing between the first box 12 and the second box 3 so as to improve the stability of the bicycle.

It should be clear to those skilled in the art that further embodiments of the present invention may be made without departing from the teachings of the present invention.

## Claims

1. A direct transmission system for a bicycle, said bicycle has a front axle which has a first end and a second end, a bottom bracket engaged around said front axle, a rear axle, a hub member rotatably engaged around said rear axle, a chain stay, and a seat stay, said direct transmission system comprising:
a first bevel gear mounted on said first end of said front axle to rotate therewith;
a first box fixed to said bottom bracket;
a shell member having a second box and a bracket which are coupled together for housing said rear axle, said chain stay being securely engaged between said first box and said second box, said bracket abutting against said hub member;
a shaft mounted in said chain stay and having a first end and a second end, said first and second ends respectively extending into said first and second boxes;
a second bevel gear mounted on said first end of said shaft to rotate therewith and meshing with said first bevel gear;
a third bevel gear mounted on said second end of said shaft to rotate therewith and received in said second box; and
a fourth bevel gear mounted in said shell member for meshing with said third bevel gear and securely attached to said hub member to rotate therewith.

2. The direct transmission system for a bicycle in accordance with claim 1, further comprising a pair of first ball bearings mounted between said second bevel gear and said first box, a retaining ring being securely engaged on a distal end of said second bevel gear and abutting against said pair of first ball bearings to prevent said pair of first ball bearings from disengaging with said second bevel gear.

3. The direct transmission system for a bicycle in accordance with claim 1, further comprising a second ball bearing mounted between said third bevel gear and said second box, a retaining ring being securely engaged on a distal end of said third bevel gear and abutting against said second ball bearing to prevent said second ball bearing from disengaging with said third bevel gear.

4. The direct transmission system for a bicycle in accordance with claim 1, wherein said second bevel gear has a first key slot formed therein and said third bevel gear has a second key slot formed therein, said first and second ends of said shaft each having a plurality of key slots longitudinally formed thereon and respectively engaged with said first and second key slots by appropriate keys in said second and third bevel gears.

5. The direct transmission system for a bicycle in accordance with claim 1, wherein said bracket has a hole formed therein through which said rear axle passes and is thus threadedly engaged with a nut.

6. The direct transmission system for a bicycle in accordance with claim 1, wherein said second box has at least one first lug with a hole therein projecting from an peripheral portion thereof, and said bracket has at least one second lug with a hole therein projecting from one side thereof for engagement with said first lug of said second box.

7. The direct transmission system for a bicycle in accordance with claim 1, further comprising a seat stay end extending outwardly from said second box, said seat stay end having a protrusion protruding from a distal end thereof for engaging with said seat stay of said bicycle.

8. The direct transmission system for a bicycle in accordance with claim 1, wherein said bottom bracket has a hole formed in a peripheral portion thereof which is opposite to said first box through which an interior of said bottom bracket is viewable from exterior, a plate being engaged on said bottom bracket for covering said hole.

9. The direct transmission system for a bicycle in accordance with claim 1, wherein said chain stay is securely attached by means of such as brazing between said first box and said second box.
